## Europäisches Patentamt

## European Patent Office

## Office européen des brevets

(11) Veröffentlichungsnummer : **0 004 336**
**B1**

(12) **EUROPÄISCHE PATENTSCHRIFT**

(45) Veröffentlichungstag der Patentschrift :
**11.02.81**

(51) Int. Cl.³ : **F 16 J 15/32**

(21) Anmeldenummer : **79100763.6**

(22) Anmeldetag : **14.03.79**

(54) **Dichtungsanordnung für eine bewegte Stange enthaltende Gehäuseöffnung.**

(30) Priorität : **25.03.78 DE 2813163**

(43) Veröffentlichungstag der Anmeldung :
**03.10.79 (Patentblatt 79/20)**

(45) Bekanntmachung des Hinweises auf die Patenterteilung : **11.02.81 Patentblatt 81/06**

(84) Benannte Vertragsstaaten :
**DE FR GB IT**

(56) Entgegenhaltungen :
**GB - A - 1 008 657**
**GB - A - 1 385 882**
**US - A - 2 295 160**
**US - A - 3 645 542**

(73) Patentinhaber : **Martin Merkel KG**
**Sanitasstrasse 17-21**
**D-2102 Hamburg 93 (DE)**

(72) Erfinder : **Hopp, Helmut**
**Legienstrasse 156**
**D-2000 Hamburg 74 (DE)**

(74) Vertreter : **Glawe, Richard, Dr. Ing. et al**
**Liebherrstrasse 20**
**D-8000 München 26 (DE)**

Imprimerie Jouve, 17, rue du Louvre, 75001 Paris, France

## Dichtungsanordnung für eine bewegte Stange enthaltende Gehäuseöffnung

Die Erfindung bezieht sich auf eine Dichtungsanordnung mit einem eine Gehäuseöffnung bildenden Gehäuse, einer in der Gehäuseöffnung in Längsrichtung oder drehend bewegten Stange und einem die Gehäuseöffnung zwischen der Stange und dem Gehäuse schließenden, auswechselbaren Dichtungsring aus elastomerem Werkstoff, der mit einer inneren Ringfläche mit der Stangenoberfläche zusammenwirkt und durch einen von seinem Profilkörper nach außen vorspringenden und hinter einen Gehäusebund greifenden Profilteil gehalten ist, wobei der Dichtungsring in einer sich nach vorne zur Montageseite öffnenden Nut einen nach hinten bis in den Querschnittsbereich des radial vorspringenden Profilteils sich erstrekkenden Ring aus härterem Werkstoff enthält.

In manchen Anwendungsfällen verlangt man, daß Dichtungsringe derart offen zur Montageseite eingebaut sind, daß sie ohne Ausbau der Stange aus dem Gehäuse ausgetauscht werden können. Dies gilt insbesondere für die Abdichtung von Kolbenstangen und Plungern. Dabei setzt man den Dichtungsring (oder mehrere) in einen axial zugänglichen Dichtraum, der nach Einbau des Dichtungsrings durch einen Deckel abgeschlossen wird, der die in Richtung nach außen auf den Dichtungsring wirkenden Kräfte aufnimmt. In diesem Zusammenhang und im Zusammenhang mit der Erfindung umfaßt der Begriff Dichtungsring auch sogenannte Abstreifringe, die zur Entfernung von Schmutz von einer Stange vor einer dicht abschließenden Dichtungsanordnung angeordnet sind. Ferner umfaßt der Begriff Stange nicht nur in Längsrichtung bewegte Organe sondern auch drehend bewegte Wellen.

Es ist bekannt, einen Schmutzabstreifer in einer Umfangsnut eines Gehäuses zu halten. Dabei ist die radiale Dicke des Ringkörpers größer als der radiale Abstand zwischen der Stange und dem die Nut nach außen begrenzenden Bund, so daß der Abstreifring nicht durch ungewöhnlich hohe Kräfte, wie beispielsweise erhöhten Innendruck oder ungewöhnlich starke Reibungsverbindung mit der Stange aus dem Einbauraum herausgerissen werden kann. Ein solcher Abstreifring kann nur nach Entfernung der Stange oder nach Entfernung des die Nut nach außen begrenzenden Bundes (der dann beispielsweise als lösbarer Deckel ausgebildet ist) montiert werden. Um die Demontage der Stange oder des Gehäuses zu vermeiden, sind auch schon Abstreifringe bekanntgeworden, die mit einer äußeren Umfangsversteifung in Form eines metallenen Käfigs oder einer Armierung aus Kunststoff oder Gewebe versehen sind, die es gestatten, den Abstreifring in eine nach außen offene, nicht durch einen Bund begrenzte Gehäusebohrung im Preßsitz einzusetzen. Dies ist jedoch nicht möglich bei den (meist verwendeten) aufgeschnittenen oder geteilten Abstreifringen, weil diese zur Schließung der Trennfuge über ihren gesamten Querschnitt und insbesondere in ihrem mit der Stangenoberfläche zusammenwirkenden Bereich einer Druckspannung in Umfangsrichtung ausgesetzt werden müssen und diese bei armierten Ringen praktisch ausschließlich von der Armierung aufgenommen wird, so daß im stangennahen Querschnittsbereich keine ausreichende Schließkraft im Bereich der Trennfuge gewährleistet ist. Außerdem ist es bei geteilten Ringen oftmals nicht mehr möglich, die notwendige Haltekraft durch Preßsitz zu gewährleisten ; es muß daher eine zusätzliche Halteplatte oder ein anderes Halteelement wie z. B. ein Sprengring zur axialen Fixierung vorgesehen werden. Eine solche Anordnung ist teuer und erfordert zusätzliche Baulänge. Sie ist auch störanfällig, da durch die Halteeinrichtung vor dem Abstreifer ein Hohlraum gebildet wird, in dem sich Schmutz einlagern kann.

Die FR-A-23 39 112 zeigt einen Dichtungsring der eingangs genannten Art, der über seine gesamte axiale Länge an der Stange anliegt und eine nach außen offene Nut aufweist, in der der Kragen eines metallenen Abstreifrings gehalten ist. Die Nut und der Kragen weisen beträchtliche Abweichungen von der achsparallelen Richtung auf, wobei der Dichtungsring außen und innen zwischen Gehäuse und Stange keine Ausweichmöglichkeit besitzt, so daß der Kragen des Abstreifers in der Nut des Dichtungsrings festgehalten wird und nicht durch unvorhergesehene Kräfte herausgerissen werden kann. Er kann daher auch nicht nachträglich in den Dichtungsring eingesetzt werden. — Der Dichtungsring besitzt am Außenumfang eine umlaufende, radial vorspringende Leiste, die in eine Umfangsnut des Gehäuses haltend eingreift. Die Nut wird nach außen durch einen Bund begrenzt, der auf seiner Außenseite abgeschrägt ist, um die Montage des Dichtungsrings zu erleichtern. Offenbar soll also der Dichtungsring montiert werden, indem er in die Gehäuseöffnung eingepreßt wird, wobei die Umfangsleiste im Bereich des Bundes zunächst radial nach innen deformiert wird, um nach dem Passieren des Bundes in die Nut hinein aufzuspringen. Diese Deformation, die offenbar durch den Kragen des metallenen Abstreifrings nicht behindert wird, tritt nicht nur bei nach innen gerichteten Montagekräften auf, sondern auch bei nach außen gerichteten Kräften, die den Dichtungsring aus dem Gehäuse herausdrängen. Die Haltesicherheit des Dichtungsrings in dem Gehäuse ist daher begrenzt.

Der Erfindung liegt die Aufgabe zugrunde, eine Dichtungsanordnung der eingangs genannten Art zu schaffen, deren Dichtungsring durch den Ringspalt zwischen dem Gehäusebund und der Stange montierbar ist und dennoch große Haltesicherheit gegenüber nach außen wirkenden Kräften besitzt.

Die erfindungsgemäße Lösung besteht darin, daß der nach außen vorspringende Profilteil insgesamt axial gegenüber der mit der Stange zusammenwirkenden Ringfläche versetzt ist und einen freien radialen Abstand von der Stange aufweist, derart, daß der Dichtungsring an keiner innerhalb des Bundes oder dahinterliegenden Stelle eine radiale Dicke aufweist, die nach Abzug seines freien radialen Abstands von der Stange und der radialen Weite der Nut größer ist als der Abstand des Bundes von der Stange und daß der in die im wesentlichen achsparallel verlaufende Nut nach der Montage des Dichtungsrings einsetzbare Ring aus härterem Werkstoff als Stützring einen im Verhältnis zu der gegenseitigen radialen Überdeckung des Bundes und des dahintergreifenden Profilteils so geringen radialen Abstand von dem Bund hat, daß der radial vorspringende Profilteil an einer nach innen gerichteten Lösebewegung gehindert wird.

Der erfindungsgemäße Dichtungsring kann leicht montiert werden, weil er, solange der Stützring noch nicht eingesetzt ist, sich während der Montage ausreichend und ohne Schwierigkeiten verformen läßt. Er kann durch den Ringspalt zwischen dem Bund und der Stange hindurchgezwängt werden, weil er an keiner Stelle ein größeres radiales Maß aufweist, als es der Weite dieses Ringspalts entspricht. Dabei wird die Montage dadurch vereinfacht, daß die stirnseitig offene Nut zusätzliche Verformungsmöglichkeiten gibt. Man kann auch mit einem Montagewerkzeug am Nutgrund auf den zu montierenden Ring einwirken, so daß dieser durch den Ringspalt zwischen dem Bund und der Stange (unter Verminderung seiner radialen Dicke) mehr hindurchgezogen wird, als (unter entsprechender radialer Verdikkung) von außen hineingedrückt zu werden. Wenn der Dichtungsring seine gewünschte Stellung in der Gehäuseöffnung erreicht hat, wird der Stützring in die Nut eingeschoben. Dadurch wird der hinter den Gehäusebund außen vorspringende Profilteil des Dichtungsrings in seiner Lage gesichert und an einer radial nach innen gerichteten Lösebewegung gehindert, so daß der erfindungsgemäße Dichtungsring eine große Haltesicherheit gewährleistet. Dieses Prinzip ist vornehmlich für Schmutzabstreifringe und im Zusammenhang mit in ihrer Längsrichtung bewegten Stangen von Interesse, kann aber auch bei anderen Dichtungsringen und bei rotierenden Wellen verwendet werden.

Bei der Erfindung kommt es darauf an, daß der Dichtungsring wegen der Abwesenheit des Stützrings mit geringen Kräften durch den Ringspalt zwischen dem Gehäusehund und der Stange hindurch montiert werden kann, während er im fertig montierten Zustand wegen der Anwesenheit des Stützrings hohen in Demontagerichtung wirkenden Kräften standzuhalten vermag. Je geringer sein radialer Abstand von dem Bund ist und je größer die gegenseitige radiale Überdeckung des Bundes und des dahintergreifenden Profilteils ist, um so größeren Lösekräften vermag der Dichtungsring standzuhalten. Wie groß die maximalen Lösekräfte sein müssen, richtet sich selbstverständlich nach dem jeweiligen Anwendungszweck. Wenn der Anspruch verlangt, daß der Stützring den radial vorspringenden Profilteil an einer nach innen gerichteten Lösebewegung hindert, so ist diese Bedingung an den Lösekräften zu messen, mit denen man vernünftigerweise maximal im jeweiligen Einsatzfall zu rechnen hat.

Zweckmäßigerweise besitzt der Stützring im Querschnitt eine Verdickung, die formschlüssig mit einer entsprechenden Hinterschneidung der Nut zusammenwirkt, damit er unverlierbar im Dichtungsring gehalten ist. Dabei ist im allgemeinen vorgesehen, daß ausschließlich der weiche Elastomer des Dichtrings an dem Gehäusebund anliegt, während die Nut bzw. der Stützring durch einen aus dem weicheren Elastomer des Dichtungsrings gebildeten Querschnittsbereich von der mit dem Bund zusammenwirkenden Oberfläche des Dichtungsrings getrennt ist. Statt dessen kann aber auch vorgesehen sein, daß der Stützring wenigstens einen Teil der mit dem Bund zusammenwirkenden Dichtringoberfläche bildet. Letzteres ist insbesondere dann von Vorteil, wenn der Stützring einen hinter den Bund greifenden äußeren Ringvorsprung besitzt.

Der Stützring besteht vorzugsweise aus einem Metall oder aus einem harten Polymer. Unter « hart » im Sinne der Erfindung sind vornehmlich die Härtegrade, die allgemeinen mit der Shore-D-Skala gemessen werden, und die darüberliegenden anzusehen, während für den eigentlichen Dichtungsring im Falle der Verwendung als Abstreifring Härten bevorzugt werden, die im oberen Bereich der Shore-A-Skala, vorzugsweise unterhalb 80 bis 90 Shore A, liegen.

Wenn der Querschnitt des Dichtungs- bzw. Abstreifrings durch die zur Aufnahme des Stützrings bestimmte Nut derart unterteilt wird, daß die Dichtungslippe mit dem Hauptquerschnittsteil nur durch eine verhältnismäßig dünne und deshalb zu nachgiebige Materialbrücke in Verbindung steht, kann nach der Erfindung vorgesehen sein, daß wenigstens ein Teil dieser Materialbrücke verstärkt ausgeführt ist. Die Verstärkung kann durch Wahl eines härteren Werkstoffs in diesem Bereich oder durch Wahl Armierung mit Einlagen (z.B. Gewebe) erfolgen.

Die geringe Nachgiebigkeit dieses verstärkten Bereichs wirkt sich bei der Montage nicht nachteilig aus, weil der sich radial außerhalb der Ringnut befindende Querschnittsteil in die Ringnut hinein ausweichen kann und deshalb keine oder nur eine geringfügige Verformung des verstärkten Bereichs während der Montage erforderlich ist.

Die Erfindung wird im folgenden näher unter Bezugnahme auf die Zeichnung erläutert, die in drei Figuren drei unterschiedliche Ausführungsformen im montierten Zustand in einem radialen Halb-Längsschnitt veranschaulicht. Man hat sich die dargestellten Teile als Rotationsteile mit der strichpunktierten Linnie als Längsachse vorzustellen.

In allen Figuren ist bei 1 ein Gehäuse, das beispielsweise der Deckel einer Plungerdichtung ist, und bei 2 eine Stange mit der Mittellinie 3 dargestellt. In dem Gehäuse 1 ist eine Gehäusenut 4 zur Aufnahme des radial vorspringenden Profilteils 5 eines Abstreifrings gebildet, der mit einer von der Lippe 6 gebildeten Ringfläche 14 an der Stange 2 anliegt. Der Dichtungsring ist längs einer Radialfläche (nicht gezeigt) geteilt und mit einem gewissen radialen und zirkumferentialen Übermaß ausgebildet, damit der Profilteil 5 der der radial außen liegende Querschnittsteil des Profilkörpers 16 des Dichtungsrings ist, sich fest in die Gehäusenut 4 preßt und damit die Teilungsflächen des Rings dicht gegeneinander gepreßt werden. Bei 7 kann ein gewisser axialer Spielraum vorgesehen sein, der jedoch nicht immer erforderlich ist. Nach außen zur Montageseite hin wird die Gehäusenut 4 durch einen Bund 8 begrenzt, der zwischen sich und der Oberfläche der Stange 2 einen für die Montage des Rings ausreichenden Ringspalt beläßt. Die Dicke des Profilkörpers 16 ist zu diesem Zweck nach den oben näher angegebenen Regeln nicht wesentlich größer als die Weite dieses Ringspalts bemessen. Außerdem ist die Dichtung so weich ausgeführt, daß sie unter den bei der Montage notwendigen Verformungen nicht verletzt wird. Der Bund 8 bildet eine der Gehäusenut 4 zugewendete Stirnfläche, die durch ihr Zusammenwirken mit einer ihr zugewendeten Stirnfläche des radial vorspringenden Profilteils 5 den Abstreifring in der Gehäusenut 4 festhält.

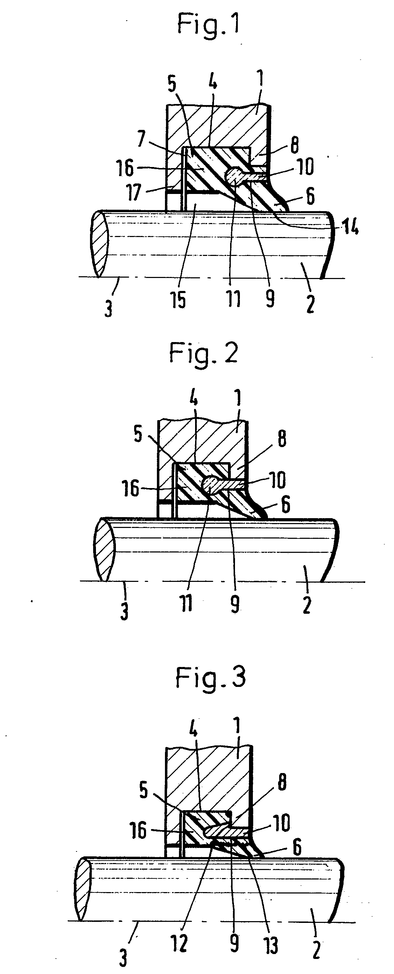

Bei 9 ist in den Abstreifring eine Ringnut eingeschnitten, die sich im wesentlichen in axialer Richtung erstreckt und sich zu ihrem Nutgrund hin erweitert. In diese Nut ist der Stützring 10 eingeschoben, der im Gegensatz zu dem Abstreifring aus einem harten Material besteht und im wesentlichen komplementär zur Querschnittsgestalt der Ringnut 9 geformt ist. Er besitzt eine Kopf 11, der in den Ausführungsbeispielen der Fig. 1 und 2 hinter die Hinterschneidungen einer entsprechenden Nuterweiterung faßt und dadurch formschlüssig innerhalb des Körpers des Abstreifringes gesichert ist.

Im Beispiel gemäß Fig. 1 wirkt nur das weiche Material des Abstreifringes mit dem Bund 8 des Gehäuses 1 zusammen, während im Beispiel der Fig. 2 dieses Material nur in axialer Richtung an dem Bund 8 anliegt, während er in radialer Richtung mit dem Stützring 10 zusammenwirkt, was den Vorteil hat, daß ein größerer radialer Spielraum für die Bemessung der Lippe 6 verbleibt. Im Beispiel der Fig. 3 weist der Stützring 10 einen Ringvorsprung 12 auf, der hinter den Bund 8 greift und dadurch formschlüssig hinter diesem gesichert ist. Der Stützring 10 muß bei den Ausführungen gemäß Fig. 2 und 3, um in dieser Lage montiert werden zu können, eine gewisse geringe radiale Nachgiebigkeit besitzen.

Man erkennt in Fig. 3, daß die Lippe 6 nur über einen verhältnismäßig dünnen Steg mit dem Profil Körper 16 des Dichtungsrings verbunden ist. Damit trotzdem ausreichende Kräfte übertragen werden können, ist dieser Steg mit einer Gewebearmierung 13 versehen.

Der kompakt ausgebildete Profilkörper 16 des Dichtungsrings, an dessen äußerem Umfang der radial vorspringende Profilteil 5 gebildet ist, weist radial innenseitig einen beträchtlichen radialen Abstand 15 von der Oberfläche der Stange 2 auf. Dieser Abstand ist mindestens so groß wie die radiale Höhe des Bundes 8, damit der Dichtungsring durch den Ringspalt zwischen dem Bund 8 und der Oberfläche der Stange 2 hindurchgezwängt werden kann. Zwar verringert sich dieser Abstand zur Lippe 6 hin auf einen Wert, der geringer ist als die radiale Überdeckung des Bundes 8 mit dem Profilteil 5; jedoch tritt in diesem Bereich als zusätzlicher Verformungsraum die Ringnut 9 hinzu.

Bei der Montage wird der Dichtungsring ohne den Stützring 10 zunächst zwischen dem Bund 8 und der Oberfläche der Stange 2 hindurch in den Einbauraum gedrückt. Wenn er die vorgesehene Lage erreicht hat, wird der Stützring 10 in die Ringnut 9 eingepreßt. Der Dichtungsring kann sich währenddessen an der die Gehäusenut 4 hinten begrenzenden Wand 17 abstützen.

Der Abstützungseffekt des Stützrings 10 ist umso stärker, je näher er dem Bund 8 liegt und je größer die radiale Überdeckung des Bundes 8 und des nach außen vorragenden Profilteils 5 ist. Im allgemeinen wird man den Abstand des Stützrings 10 von dem Bund 8 nicht wesentlich größer machen als die genannte radiale Überdeckung. Jedoch sind Ausnahmen von dieser Regel denkbar, wenn nur begrenzte Haltekräfte verlangt werden, wenn der Stützring 10 große axiale Länge hat oder wenn der radial außerhalb des Stützrings 10 befindliche Teil des Dichtungsrings (insbesondere der radial vorspringende Profilteil) aus einem nicht sehr weichen Werkstoff bestehen.

**Ansprüche**

1. Dichtungsanordnung mit einem eine Gehäuseöffnung (4) bildenden Gehäuse (1), einer in der Gehäuseöffnung (4) in Längsrichtung oder drehend bewegten Stange (2) und einem die Gehäuseöffnung (4) zwischen der Stange (2) und dem Gehäuse (1) schließenden, auswechselbaren Dichtungsring aus elastomerem Werkstoff, der mit einer inneren Ringfläche (14) mit der Stangenoberfläche zusammenwirkt und durch einen von seinem Profilkörper (16) nach außen vorspringenden und hinter einen Gehäusebund (8) greifenden Profilteil (5) gehalten ist, wobei der Dichtungsring in einer sich nach vorne zur Montageseite öffnenden Nut (9) einen nach hinten bis in den Querschnittsbereich des radial vorspringenden Profilteils (5) sich erstreckenden Ring aus härterem Werkstoff enthält, dadurch gekennzeichnet, daß der nach außen vorspringende Profilteil (5) insgesamt axial gegenüber der mit der Stange (2) zusammenwirkenden Ringfläche (14) einen freien radialen Abstand (15) von der Stange (2) aufweist, derart, daß der Dichtungsring an keiner innerhalb des Bundes (8) oder dahinterliegenden Stelle eine radiale Dicke aufweist, die nach Abzug seines freien radialen Abstands (15) von der Stange (2) und der radialen Weite der Nut (9) größer ist als der Abstand des Bundes (8) von der Stange (2) und daß der in die im wesentlichen achsparallel verlaufende Nut (9) nach der Montage des Dichtungsrings einsetzbare Ring aus härterem Werkstoff als Stützring (10) einen im Verhältnis zu der gegenseitigen radialen Überdeckung des Bundes (8) und des dahintergreifenden Profilsteils (5) so geringen radialen Abstand von dem Bund (8) hat, daß der radial vorspringende Profilteil (5) an einer nach innen gerichteten Lösebewegung gehindert wird.

2. Dichtungsanordnung nach Anspruch 1, dadurch gekennzeichnet, daß der Stützring (10) im Querschnitt eine Verdikkung (11) aufweist, die formschlüssig mit einer Hinterscheidung der Nut (9) zusammenwirkt.

3. Dichtungsanordnung nach Anspruch 1 oder 2, dadurch gekennzeichnet, daß die Nut (9) bzw. der Stützring (10) durch einen aus dem Elastomer des Dichtungsrings gebildeten Querschnittsbereich von der mit dem Bund (8) zusammenwirkenden Oberfläche des Dichtungsrings getrennt ist.

4. Dichtungsanordnung nach Anspruch 1 oder 2, dadurch gekennzeichnet, daß der Stützring (10) einen Teil der mit dem Bund (8) zusammenwirkenden Dichtungsoberfläche bildet.

5. Dichtungsanordnung nach Anspruch 4, dadurch gekennzeichnet, daß der Stützring (10) einen hinter den Bund (8) greifenden äußeren Ringvorsprung (12) bildet.

6. Dichtungsanordnung nach einem der Ansprüche 1 bis 5, dadurch gekennzeichnet, daß der Stützring (10) aus Metall besteht.

7. Dichtungsanordnung nach einem der Ansprüche 1 bis 5, dadurch gekennzeichnet, daß der Stützring (10) aus einem harten Polymer besteht.

8. Dichtungsanordnung nach einem der Ansprüche 1 bis 7, dadurch gekennzeichnet, daß wenigstens ein Teil des radial innerhalb der zur Aufnahme des Stützrings (10) bestimmten Ringnut (9) liegenden Querschnittsbereichs des Dichtungsrings verstärkt ausgeführt ist.

9. Dichtungsanordnung nach einem der Ansprüche 1 bis 8, dadurch gekennzeichnet, daß der Dichtungsring und der Stützring (10) aufgeschnitten sind.

10. Dichtungsring aus elastomerem Werkstoff zur Verwendung in der Anordnung nach einem der Ansprüche 1 bis 9.

## Claims

1. A seal arrangement comprising a housing (1) which forms a housing aperture (4), a rod (2) which is moved in the housing aperture (4) in the longitudinal direction or in a rotating manner, and an exchangeable seal ring which shuts the housing aperture (4) between the rod (2) and the housing (1) and which is made of an elastomeric material and which, with an internal ring area (14), co-operates with the rod surface and which is held by a profiled part (5) which projects outwardly from its profiled body (16) and engages behind a housing collar (8), the seal ring containing in a groove (9), which opens towards the front in the direction of the assembly side, a ring which extends backwardly as far as the cross-sectional zone of the radially projecting profiled part (5) and which is made of a harder material, characterised in that the outwardly projecting profiled part (5) is altogether displaced in the axial direction with respect to the ring area (14) co-operating with the rod (2), and in that the radial clearance (15) between this part and the rod (2) is such that the seal ring does not at any point inside the collar (8) or therebehind have a radial thickness which, after the deduction of the radial clearance (15) between it and the rod (2) and the radial width of the groove (9), is larger than the distance of the collar (8) from the rod (2), and in that the radial clearance between the ring in a harder material which, after the assembly of the seal ring, is insertable into the groove (9), which extends in a substantially axially parallel manner, and which acts as a supporting ring (10) and the collar (8) is so minimal in relation to the mutual radial overlapping of the collar (8) and the profiled part (5) engaging therebehind that the radially projecting profiled part (5) is prevented from carrying out an inwardly directed movement of detachment.

2. A seal arrangement as claimed in Claim 1, characterised in that the supporting ring (10) in cross section has a bulge (11) which co-operates in a form-locking manner with an undercut of the groove (9).

3. A seal arrangement as claimed in Claim 1 or 2, characterised in that the groove (9) or the supporting ring (10) is separated from the seal ring surface co-operating with the collar (8) by a cross-sectional area formed by the elastomer of the seal ring.

4. A seal arrangement as claimed in Claim 1 or 2, characterised in that the supporting ring (10) forms part of the seal surface co-operating with the collar (8).

5. A seal arrangement as claimed in Claim 4, characterised in that the supporting ring (10) forms an external ring projection (12) which engages behind the collar (8).

6. A seal arrangement as claimed in one of Claims 1 to 5, characterised in that the supporting ring (10) consists of metal.

7. A seal arrangement as claimed in one of Claims 1 to 5, characterised in that the supporting ring (10) consists of a hard polymer.

8. A seal arrangement as claimed in one of Claims 1 to 7, characterised in that at least a portion of the seal ring cross-sectional area which lies radially within the annular groove (9) intended for receiving the supporting ring (10) is reinforced.

9. A seal arrangement as claimed in one of Claims 1 to 8, characterised in that the seal ring and the supporting ring (10) have been cut open.

10. A seal ring made of an elastomeric material for use in the arrangement according to one of Claims 1 to 9.

## Revendications

1. Dispositif d'étanchéité, comprenant une boîte (1) qui délimite une ouverture de boîte (4), une barre (2) animée d'un mouvement de translation longitudinale ou de rotation dans l'ouverture de boîte (4) et une bague d'étanchéité interchangeable de matière élastomère, obturant l'ouverture de boîte (4) entre la barre (2) et la boîte (1), bague qui coopère par une surface annulaire intérieure (14) avec la surface de la barre et qui est maintenue par une partie profilée (5) en saillie vers l'extérieur sur son corps profilé (16) et s'engageant derrière un rebord (8) de la boîte, la bague d'étanchéité contenant, dans une rainure (9) ouverte vers l'avant du côté montage, une bague de matière plus dure qui s'étend vers l'arrière jusqu'au niveau en coupe transversale de la partie profilée (5) qui fait saillie radialement, caractérisé en ce que la partie profilée (5) en saillie vers l'extérieur est dans l'ensemble décalée axialement par rapport à la surface annulaire (14) qui coopère avec la barre (2) et est séparée de la barre (2) par une distance radiale libre (15) telle qu'en aucun point en dedans du rebord (8) ou en arrière de celui-ci, la bague d'étanchéité ne présente une épaisseur radiale qui, déduction faite de sa distance radiale libre (15) de la barre (2) et de la largeur radiale de la gorge (9), soit plus grande que la distance entre le rebord (8) et la barre (2), et en ce que la bague de matière plus dure, servant de bague de support (10) et destinée à être insérée, à la suite du montage de la bague d'étanchéité, dans la gorge (9) de celle-ci qui est sensiblement parallèle à l'axe, est séparée du rebord (8) par une distance radiale suffisamment petite, en comparaison de la longueur de recouvrement radial mutuel du rebord (8) et de la partie profilée (5) engagée derrière celui-ci, pour que tout mouvement de dégagement dirigé vers l'intérieur soit interdit à la partie profilée (5) qui fait saillie radialement.

2. Dispositif d'étanchéité selon la revendication 1, caractérisé en ce que la bague de support (10) présente en coupe transversale un épaississement (11) qui coopère par emboîtement avec une contre-dépouille de la gorge (9).

3. Dispositif d'étanchéité selon la revendication 1 ou 2, caractérisé en ce que la gorge (9) ou la bague de support (10) est séparée de la surface de la bague d'étanchéité qui coopère avec le rebord (8) par une région de la section transversale qui est faite de l'élastomère de la bague d'étanchéité.

4. Dispositif d'étanchéité selon la revendication 1 ou 2 caractérisé en ce que la bague de support (10) constitue une partie de la surface d'étanchéité qui coopère avec le rebord (8).

5. Dispositif d'étanchéité selon la revendicatioin 4, caractérisé en ce que la bague de support (10) comporte une saillie annulaire (12) extérieure qui s'engage derrière le rebord (8).

6. Dispositif d'étanchéité selon l'une quelconque des revendications 1 à 5, caractérisé en ce que la bague de support (10) est faite de métal.

7. Dispositif d'étanchéité selon l'une quelconque des revendications 1 à 5, caractérisé en ce que la bague de support (10) est faite d'un polymère dur.

8. Dispositif d'étanchéité selon l'une quelconque des revendications 1 à 7, caractérisé en ce qu'une partie au moins de la région de la section transversale de la bague d'étanchéité se trouvant à l'intérieur en direction radiale de la gorge annulaire (9) destinée à recevoir la bague de support (10) est réalisée sous forme renforcée.

9. Dispositif d'étanchéité selon l'une quelconque des revendications 1 à 8, caractérisé en ce que la bague d'étanchéité et la bague de support (10) sont fendues.

10. Bague d'étanchéité en matière élastomère, destinée à être utilisée dans le dispositif selon l'une quelconque des revendications 1 à 9.

Fig.1

Fig. 2

Fig. 3